# EUROPÄISCHE PATENTSCHRIFT

(11) **EP 3 359 872 B1**
(45) Veröffentlichungstag und Bekanntmachung des Hinweises auf die Patenterteilung: **11.03.2020**
(21) Anmeldenummer: 16781090.2
(22) Anmeldetag: 07.10.2016
(51) Int. Cl.: F21V 3/00, F21V 17/00, F21V 21/02, F21S 4/28, B65H 75/00

(54) **VERFAHREN UND VORRICHTUNG ZUR BEFESTIGUNG EINER LÄNGLICHEN BAUEINHEIT AN EINER TRAGSCHIENENANORDNUNG**
METHOD AND APPARATUS FOR MOUNTING AN ELONGATE UNIT ON A SUPPORTING RAIL ARRANGEMENT
PROCÉDÉ ET DISPOSITIF POUR FIXER UNE UNITÉ STRUCTURALE OBLONGUE SUR UN ENSEMBLE PROFILÉ PORTEUR

(30) Priorität: 09.10.2015 DE 102015219606
(43) Veröffentlichungstag der Anmeldung: 15.08.2018
(73) Patentinhaber: Zumtobel Lighting GmbH, 6850 Dornbirn (AT)
(72) Erfinder: LADSTÄTTER, Gerald, 6833 Klaus (AT)
(74) Vertreter: Thun, Clemens
(86) Internationale Anmeldenummer: PCT/EP2016/073982
(87) Internationale Veröffentlichungsnummer: WO 2017/060416

(56) Entgegenhaltungen:
- EP-A1- 2 916 408
- NL-C2- 1 035 129
- US-A1- 2005 161 359

## Beschreibung

Die vorliegende Erfindung betrifft ein Verfahren sowie eine Vorrichtung zum Befestigen einer länglichen Baueinheit, die zumindest teilweise aus einem flexiblen Material besteht, an einer sich in einer Längsrichtung erstreckenden Tragschienenanordnung. Mit Hilfe der Erfindung soll die Montage so genannter Lichtbandsysteme erleichtert werden.

Lichtbandsysteme finden in der Beleuchtungstechnologie vielfältig Verwendung, da sie eine flexible Anpassung der Beleuchtung an äußere Gegebenheiten ermöglichen. Darüber hinaus besteht die Möglichkeit, mit Hilfe eines derartigen Lichtbandsystems eine kontinuierliche Beleuchtung auch über eine große Länge hinweg zu erzielen.

Bekannte Lichtbandsysteme beruhen auf der Verwendung einer so genannten Tragschienenanordnung, welche die zentrale Halterung für alle weiteren Komponenten des Lichtbandsystems darstellt. Derartige Anordnungen bestehen aus einzelnen, hintereinander angeordneten Tragschienenelementen, die z.B. aus länglichen Blechprofilteilen gebildet sind, welche beispielsweise im Querschnitt U-förmig und nach unten geöffnet sind, so dass sie einen sich in Längsrichtung erstreckenden Aufnahmeraum bilden, der zunächst einmal zur Anordnung der für die Stromversorgung der Leuchtmittel des Lichtbandsystems verantwortlichen Komponenten genutzt wird. Es handelt sich hierbei einerseits um die üblicherweise entlang der gesamten Anordnung verlaufenden Kabel für die Stromversorgung sowie gegebenenfalls auch für die Signalübertragung. Des Weiteren werden oftmals allerdings auch zumindest die Kontaktierungsmittel von an der Tragschienenanordnung zu befestigenden Leuchtmodulen innerhalb des Aufnahmeraums aufgenommen sowie gegebenenfalls auch zugehörige Betriebsgeräte wie Konverter oder dergleichen, mit deren Hilfe die durch die Durchgangsverdrahtung zur Verfügung gestellte Stromversorgung in einen zum Betrieb der Lichtquellen geeigneten Strom umgesetzt wird. Darüber hinaus kommen zwischenzeitlich vermehrt auch Lichtbandsysteme zum Einsatz, bei denen auch die Lichtquellen selbst innerhalb des Aufnahmeraums angeordnet werden und die Unterseite der Tragschienenanordnung dann durch eine lichtdurchlässige Abdeckung verschlossen wird, welche das Lichtaustrittselement des auf diese Weise realisierten Lichtbands bildet.

Bei derartigen Lichtbandsystemen stellt sich immer die Aufgabenstellung, die Montage des gesamten Systems möglichst einfach zu gestalten. Da die Tragschienenanordnung üblicherweise aus mehreren einzelnen Tragschienenelementen zusammengesetzt wird, welche gewisse Standardlängen aufweisen und an ihren Stirnseiten entsprechend miteinander verbunden werden, ist es in der Regel nicht möglich, zunächst das gesamte Lichtbandsystem vollständig am Boden zu montieren, also beispielsweise die Tragschienen zusammenzufügen, diese mit den Mitteln zur Stromversorgung sowie den Leuchtmitteln zu versehen und eventuelle optische Abdeckungen anzubringen, und erst anschließend das gesamte Lichtband beispielsweise an der Decke eines Raums, in dem das Lichtbandsystem zum Einsatz kommen soll, zu befestigen oder an dieser aufzuhängen. Stattdessen erfolgt in der Regel zunächst eine Montage der Tragschienenanordnung beispielsweise an der Decke eines Raums, wobei erst dann im montierten Zustand der Tragschienenanordnung weitere Komponenten des Lichtbandsystems befestigt werden. Hierbei ergeben sich insbesondere dann Probleme, wenn die an der Tragschienenanordnung zu befestigenden Komponenten eine große Länge aufweisen.

Ist nämlich beispielsweise vorgesehen, dass die oben erwähnte Durchgangsverdrahtung erst im montierten Zustand der Tragschienenanordnung an dieser befestigt wird, so musste dies bislang dadurch erfolgen, dass die Verdrahtung zumindest in regelmäßigen Abständen an der Tragschienenanordnung fixiert wird. Da die Positionierung der Tragschienenanordnung üblicherweise in einer Höhe erfolgt, in der diese nicht ohne weitere Hilfsmittel wie Leitern oder dergleichen durch einen Monteur zu erreichen ist, bedeutet dies, dass während der Montage beispielsweise eine Leiter bestiegen werden muss, um an einer bestimmten Positionen Tragschienenanordnung eine Befestigung der Durchgangsverdrahtung vorzunehmen. Da dies von der bestimmten Position aus nur über eine begrenzte Länge der Tragschienenanordnung hinweg möglich ist, muss anschließend die Leiter entsprechend versetzt werden und ein weiteres Mal über einen lokalen Bereich hinweg eine Befestigung der Verkabelung vorgenommen werden. Dieser Vorgang wiederholt sich dann über die gesamte Länge der Tragschienenanordnung hinweg, so dass der Monteur mehrmalig die Leiter besteigen und wieder von dieser herabsteigen muss.

In gleicher Weise müssten beispielsweise auch Leuchtmittel montiert werden, sofern diese im Rahmen einer langgestreckten Kette mit in regelmäßigen Abständen angeordneten LED-Modulen realisiert sind, wie dies bei Lichtbandsystemen heutzutage durchaus üblich ist.

Das Anbringen der Durchgangsverdrahtung sowie möglicherweise auch der in Form einer Kette vorliegenden Leuchtmittel ist insbesondere dann problematisch, wenn diese Komponenten in großer Länge vorliegen. Zwar wäre es bei diesen elektrischen bzw. elektronischen Komponenten durchaus möglich, jeweils nur eine bestimmte kürzere Länge aufweisende Einheiten zu nutzen, diese dann entlang der Tragschienenanordnung hintereinander anzuordnen und an den Schnittstellen elektronisch zu koppeln, aus herstellungstechnischen Gründen ist allerdings bevorzugt, dass die Durchgangsverdrahtung mit eventuellen Kontaktierungselementen bzw. die Leuchtmittel-Ketten in aufgerollter Form und damit im Prinzip endlos vorliegen, da hierdurch in einfacher Weise eine Anpassung dieser Komponenten an die tatsächliche Länge des Lichtbands und insbesondere auch ein einfacherer Transport erzielt werden kann. Insbesondere in dieser aufgewickelten Form ist aber dann allerdings die Handhabung bei der oben beschriebenen Montage der Durchgangsverdrahtung bzw. der Leuchtmittel sehr mühsam.

Eine vergleichbare Problematik besteht auch bei der Befestigung der bereits oben erwähnten lichtdurchlässigen Abdeckung an dem Tragschienenanordnung. Aus optischen Gründen ist es in diesem Fall wenig praktikabel, diese Abdeckung aus einzelnen, in Längsrichtung hintereinander angeordneten Einzelteilen zu realisieren, da an den Stoßstellen Licht mehr oder weniger ungehindert das Lichtbandsystem verlassen könnte und dementsprechend keine homogene Lichtabgabe mehr realisiert werden könnte. In einer früheren Anmeldung der Anmelderin (WO 2014/174019 A1) ist deshalb eine Abdeckung beschrieben, welche wiederum im Prinzip "endlos" hergestellt wird und derart ausgestaltet ist, dass sie für einen Transport zu einer Rolle aufgewickelt werden kann. Diese Abdeckung wird dann in einem Stück, sich über die gesamte Länge der Tragschienenanordnung ersteckend an diesem angeordnet, so dass die optischen Eigenschaften des Lichtbandsystems deutlich verbessert werden. Während bei den oben beschriebenen elektrischen bzw. elektronischen Komponenten noch eine modulare Montage einzelner Einheiten denkbar wäre, ist dies nun allerdings aus den eben geschilderten Gründen für die lichtdurchlässige Abdeckung nicht möglich, weshalb sich hier in besonderer Weise das Problem der einfachen Befestigung der Abdeckung an dem Tragschienenanordnung stellt.

Schließlich ist ebenfalls aus einer weiteren Anmeldung der Anmelderin bekannt, den Aufnahmeraum einer Tragschienenanordnung zusätzlich mit einem sich in Längsrichtung erstreckenden, wiederum vorzugsweise einstückig ausgebildeten Profilelement auszukleiden. Ziel dieser Maßnahme ist es, einen Aufnahmeraum für die elektrischen und elektronischen Komponenten des Lichtbandsystems zu schaffen, der möglichst gut vor äußeren Einflüssen, insbesondere vor Staub und/oder Feuchtigkeit geschützt ist. Da wie eingangs erwähnt die einzelnen Tragschienen nur eine begrenzte Länge aufweisen und dementsprechend üblicherweise eine Tragschienenanordnung aus mehreren, stirnseitig aneinandergefügten Tragschienen besteht, treten an den Stoßstellen zwangsläufig Spalte oder Öffnungen auf, durch welche der Schutz der darin befindlichen Komponenten vor äußeren Einflüssen beeinträchtigt wird. Dies wird gemäß der oben erwähnten Lösung der Anmelderin dadurch vermieden, dass nun der Innenraum zusätzlich mit einem aus einem flexiblen Material bestehenden Profilelement ausgekleidet wird. Auch dieses Profilelement ist in vorteilhafter Weise derart gestaltet, dass es zu einer Rolle aufgewickelt transportiert werden kann, wobei sich dann wiederum vergleichbare Probleme bei der Befestigung des Profilelements an der Tragschienenanordnung ergeben.

Aus der NL 1 035 129 C2 ist ein Verfahren zum Befestigen einer Folie an einer Tragschienenanordnung bekannt. Hierzu dient eine Vorrichtung, an der die zu einer Rolle aufgewickelte Folie drehbar gelagert ist. Die Vorrichtung wird entlang der Tragschienenanordnung bewegt.

Aus der US 2005/161359 A1 ist eine Vorrichtung zur Montage einer LED-Lichterkette an einer Regenrinne bekannt.

Ferner zeigt die EP 2 916 408 A1 länglich Profilteile, welche dazu vorgesehen sind, einen länglichen kanalartigen Aufnahmeraum zu bilden, wobei die Profileteile derart gestaltet sind, dass sie jeweils für sich aufwickelbar bzw. aufrollbar sind.

Der vorliegenden Erfindung liegt dementsprechend die Aufgabenstellung zugrunde, eine neuartige Möglichkeit anzugeben, derartige längliche Baueinheiten bzw. Komponenten effizient und komfortabel an einer Tragschienenanordnung zu befestigen, so dass insgesamt die Montage beispielsweise eines Lichtbandsystems deutlich vereinfacht wird.

Die Aufgabe wird durch ein Verfahren zum Befestigen einer zumindest teilweise aus einem flexiblen Material bestehenden länglichen Baueinheit an einer Tragschienenanordnung gemäß Anspruch 1 sowie durch eine Kombination bestehen aus einer Montagevorrichtung und einer zu befestigenden Baueinheit gemäß Anspruch 8 gelöst. Vorteilhafte Weiterbildungen der Erfindung sind Gegenstand der abhängigen Ansprüche.

Die erfindungsgemäße Lösung beruht auf dem Gedanken, zur Erleichterung der Befestigung der länglichen Baueinheit eine Montagevorrichtung einzusetzen, welche eine Halterung für die zu einer Rolle aufgewickelte, zu befestigende Baueinheit aufweist und derart ausgebildet ist, dass sie an der Tragschienenanordnung angeordnet und entlang dieser bewegt werden kann. Während der Fortbewegung der Montagevorrichtung wird dabei die zu montierende Baueinheit abgewickelt und kann in diesem Stadium durch den Monteur in einfacher Weise an der Tragschienenanordnung befestigt werden, wobei - wie nachfolgend näher beschrieben - vorgesehen ist, dass die Montagevorrichtung selbst die Befestigung der zu befestigenden Baueinheit an der Tragschienenanordnung bewirkt.

Gemäß der vorliegenden Erfindung wird deshalb ein Verfahren zum Befestigen einer zumindest teilweise flexibel ausgebildeten länglichen Baueinheit an einer sich entlang einer Längsrichtung erstreckenden Tragschienenanordnung vorgeschlagen, wobei die zu befestigende Baueinheit zu einer Rolle aufgewickelt zur Verfügung gestellt wird, wobei die zu befestigende Baueinheit mittels einer Montagevorrichtung befestigt wird, welche dazu ausgebildet ist, an der Tragschienenanordnung angeordnet und entlang dieser bewegt zu werden, und wobei die Montagevorrichtung die zu der Rolle aufgewickelte Baueinheit drehbar trägt und diese während der Fortbewegung entlang der Tragschienenanordnung abgewickelt wird.

Ferner wird eine Kombination einer Montagevorrichtung und einer Baueinheit vorgeschlagen, wobei die Montagevorrichtung zur Unterstützung der Befestigung der zumindest teilweise flexibel ausgebildeten länglichen Baueinheit an einer sich entlang einer Längsrichtung ersteckenden Tragschienenanordnung ausgestattet ist, wobei die zu befestigende Baueinheit zu einer Rolle aufgewickelt zur Verfügung gestellt wird, wobei die Montagevorrichtung dazu ausgebildet ist, an der Tragschienenanordnung angeordnet und entlang dieser bewegt zu werden, und wobei die Montagevorrichtung Mittel zur drehbaren Halterung der zu der Rolle aufgewickelte Baueinheit aufweist.

Die erfindungsgemäße Kombination ist dadurch gekennzeichnet, dass es sich bei der zu befestigenden Baueinheit um ein aus einem flexiblen Material bestehendes Profilelement handelt, wobei die Montagevorrichtung Anpressmittel zum Andrücken des Profilelements an die Tragschienenanordnung aufweist, derart, dass das Profilelement klemmend an der Tragschienenanordnung befestigt wird.

Die erfindungsgemäße Lösung führt zu einer deutlichen Vereinfachung des Montageprozesses, da der Monteur nun nicht mehr die zu der Rolle aufgewickelte, zu befestigende Baueinheit halten bzw. tragen muss, sondern sich ausschließlich auf das Befestigen der abgewickelten Baueinheit an der Tragschienenanordnung beziehungsweise gegebenenfalls lediglich auf das Bewegen der Montagevorrichtung entlang der Tragschienenanordnung konzentrieren kann. Nach wie vor wird zwar das mehrmalige Besteigen einer Leiter und das anschließende Verschieben der Leiter erforderlich sein. Da hierbei nun allerdings nicht mehr die zu montierende Einheit durch den Monteur gehalten werden muss, fällt dies deutlich leichter und auch eine eventuelle Unfallgefahr wird deutlich reduziert.

Wie bereits erwähnt ist vorgesehen, dass die erfindungsgemäße Montagevorrichtung die zu befestigende Baueinheit selbst an der Tragschienenanordnung befestigt. Dies bietet sich insbesondere bei den beiden oben erwähnten Problemstellungen der Befestigung eines länglichen Profilelements zum Auskleiden der Tragschienenanordnung oder der Befestigung einer länglichen Abdeckung für die Lichtabgabe an. Die Montagevorrichtung weist geeignete Anpressmittel zum Andrücken der zu befestigenden Baueinheit an der Tragschienenanordnung auf, welche derart ausgebildet sind, dass das Profilelement klemmend an der Tragschienenanordnung befestigt wird. Die Anpressmittel können dabei insbesondere mindestens eine Rolle umfassen, über welche das abgewickelte Profilelement läuft und welche in geeigneter Weise derart positioniert und geformt ist, dass das zu befestigende Profilelement in der zur Befestigung erforderlichen Weise an die Tragschienenanordnung gedrückt wird. Dabei kann darüber hinaus auch vorgesehen sein, dass die Montagevorrichtung zusätzliche

Führungsmittel aufweist, mit deren Hilfe das Profilelement vor dem Andrücken an die Tragschienenanordnung in eine zur Befestigung geeignete Lage und/oder Form gebracht wird. Diese Führungsmittel, welche beispielsweise zusätzliche Rollen oder aber auch entsprechende Führungsstege, Führungsflächen oder dergleichen aufweisen können, können dann beispielsweise bei dem erwähnten Auskleiden der Tragschienenanordnung insbesondere dazu genutzt werden, dass hierfür verwendete Profilelement vor dem Andrücken bereits in eine dem Aufnahmeraum im Wesentlichen entsprechende Querschnittsform zu bringen.

In einer Weiterbildung der erfindungsgemäßen Lösung wäre auch durchaus denkbar, dass die Montagevorrichtung gleichzeitig mehrere zu befestigende Baueinheiten hält. Insbesondere wäre eine Lösung sinnvoll, bei der mit Hilfe einer einzigen Montagevorrichtung einerseits das zum Auskleiden der Tragschienenanordnung verwendete Profilelement gehalten und befestigt wird und andererseits auch eine Halterung und ein Abwickeln einer Durchgangsverdrahtung oder kettenartiger Leuchtmittel erfolgt. Hierdurch wird die Montage des Lichtbandsystems zusätzlich vereinfacht, da die an sich zwei separate Arbeitsgänge erforderliche Montage der Auskleidung und der Verkabelung beziehungsweise der Leuchtmittel in einem Schritt durchgeführt werden kann. In einem abschließenden Schritt könnte dann wiederum entsprechend der erfindungsgemäßen Lösung die Befestigung einer lichtdurchlässigen Abdeckung erfolgen.

Nachfolgend soll die Erfindung anhand der beiliegenden Zeichnung näher erläutert werden. Es zeigen:
- Figuren 1-3: Ansichten eines Lichtbandsystems, bei dessen Montage die erfindungsgemäße Montagevorrichtung zum Einsatz kommen soll;
- Figuren 4-6: Ansichten eines ersten Ausführungsbeispiels einer erfindungsgemäßen Montagevorrichtung;
- Figur 7: eine Darstellung der Verwendung der in den Figuren 4-6 dargestellten Montagevorrichtung, wobei in einem Arbeitsgang eine Tragschienenanordnung mit einem flexiblen Profilelement ausgekleidet und Leuchtmittel montiert werden;
- Figuren 8-11: ein zweites Ausführungsbeispiel einer erfindungsgemäßen Montagevorrichtung und
- Figur 12: die Verwendung der Montagevorrichtung gemäß den Figuren 8-11.

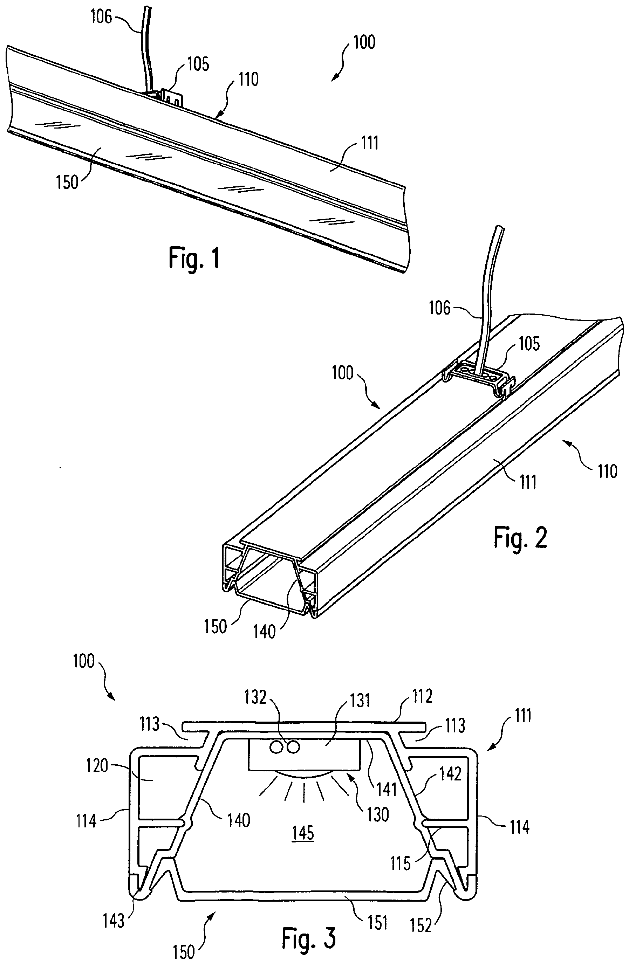

Anhand der Figuren 1-3 soll zunächst nochmals das der vorliegenden Erfindung zugrunde liegende Problem näher erläutert werden. Gezeigt ist in diesen drei Figuren ein Lichtbandsystem, welches allgemein mit dem Bezugszeichen 100 versehen ist und dessen Montage mit Hilfe der erfindungsgemäßen Vorgehensweise signifikant vereinfacht werden soll.

Tragende Komponente des Lichtbandsystems 100 ist eine längliche Tragschienenanordnung 110, welche sich in Längsrichtung des Lichtbandsystems 100 erstreckt und der Halterung aller wesentlichen Komponenten des Lichtbandsystems 100 dient. Die Tragschienenanordnung 110 besteht dabei aus mehreren länglichen einzelnen Elementen, den sog. Tragschienenelementen 111, welche die insbesondere in Figur 3 erkennbare Querschnittsform aufweisen und an ihren Stirnseiten mittels nicht näher dargestellter Verbindungsteile aneinander gefügt sind. Es handelt sich hierbei üblicherweise um aus Metall bzw. Blech bestehende Profilelemente, welche eine ausreichende Stabilität aufweisen, um ein stabiles längliches Trägersystem für das Lichtbandsystem 100 zu bilden. Dementsprechend ist es nicht praktikabel, diese Tragschienenelemente 111 in beliebiger Länge zu realisieren. Stattdessen werden üblicherweise einzelne Elemente zur Verfügung gestellt, welche Standardlängen aufweisen, wobei diese Standardelemente dann in geeigneter Weise zu der gesamten Tragschienenanordnung 110 kombiniert werden. Diese wird dann an einem geeigneten Träger, bspw. an der Decke eines zu beleuchtenden Raums befestigt, wobei hierfür verschiedene Montagemöglichkeiten bestehen. Im vorliegenden Fall ist eine Variante dargestellt, bei der das System mittels einer Seilaufhängung an einer - nicht dargestellten - Decke befestigt wird. Hierfür sind in regelmäßigen Abständen an der Oberseite der Tragschienenanordnung 110 Halteklammern 105 angeordnet, an denen jeweils ein sich zu der Decke hin erstreckendes Seil 106 verankert ist. Die Halteklammern 105 hintergreifen hierbei entsprechende, an der Bodenseite 112 der Tragschienenelemente 111 ausgebildete Hinterschneidungen 113, so dass ein sicherer Halt gewährleistet ist. Auch eine Befestigung in anderer Art und Weise z.B. an Metallträgern oder dergleichen wäre denkbar.

Wie insbesondere die Schnittdarstellung von Figur 3 zeigt, wird durch die Tragschienenelemente 111 bzw. die Tragschienenanordnung 110 insgesamt ein etwa U-förmiger, zur Unterseite hin offener Aufnahmeraum 120 geschaffen, der der Halterung und Lagerung weiterer wesentlicher Komponenten des Lichtbandsystems 100 dient. So werden bspw. üblicherweise innerhalb dieses Aufnahmeraums 120 in Längsrichtung verlaufende Durchgangsleitungen verlegt, die der Stromversorgung sowie ggf. auch der Ansteuerung der Leuchtmittel des Lichtbandsystems 100 dienen. Bspw. sind Lichtbandsysteme bekannt, bei denen die Leitungen entlang der Bodenfläche 112 der Tragschienen 111 verlaufen, wobei dann in regelmäßigen Abständen geeignete Kontaktierungselemente angeordnet sind, die der Kontaktierung durch an der Tragschienenanordnung zu befestigende Leuchtenmodule dienen. Bei einem anderen System, welches bspw. von der Anmelderin unter der Bezeichnung Tecton vertrieben wird, verlaufen in Längsrichtung der Tragschienenanordnung zu beiden Seiten des U-förmigen Aufnahmeraums sog. Stromleitprofile, in denen verschieden Drähte zur Stromversorgung und zur Signalübermittlung derart zugänglich positioniert sind, dass sie durch geeignete Kontaktierungselemente von Leuchtenmodulen kontaktiert werden können. Diese Variante eröffnet dann die Möglichkeit, frei und an nahezu beliebiger Position Leuchtmodule an der Tragschienenanordnung anzuordnen. Diese Leuchtmodule selbst können dabei unterschiedlichster Art sein und auch verschiedenste Leuchtmittel wie bspw. Gasentladungslampen oder LEDs aufweisen.

Im vorliegenden Fall ist eine weitere denkbare Variante dargestellt, bei der nämlich nicht vorgesehen ist, dass an bestimmten Positionen einzelne separate Leuchtmodule an der Tragschienenanordnung 110 angeordnet werden können. Stattdessen ist innerhalb des Aufnahmeraums 120 nunmehr ein langgestrecktes Leuchtmittel 130 angeordnet, welches aus einer Vielzahl von zu einer Kette verbundenen LED-Leuchtmodulen 131 besteht. Die in Figur 3 angedeuteten LED-Leuchtmodule 131 sind hierbei über eine Durchgangsverdrahtung, welche aus mehreren einzelnen Kabeln 132 besteht, miteinander verbunden. Die Anzahl der Kabel 132 hängt dabei davon ab, ob über die Verdrahtung lediglich eine Stromversorgung für die LED-Leuchtmodule 131 vorgenommen werden soll oder auch Steuersignale zur Ansteuerung der Leuchtmittel übertragen werden sollen. Im montierten Zustand der Leuchtmittel 130 wird dann in regelmäßigen Abständen des Lichtbandsystems 100 von den LED- Leuchtmodulen 131 Licht emittiert, welches dann über die Unterseite der Tragschienenanordnung 110 abgegeben wird.

Eine Besonderheit des in den Figuren 1-3 dargestellten Lichtbandsystems 100 besteht dabei zunächst darin, dass der Aufnahmeraum 120 der Tragschienenanordnung 110 zusätzlich durch ein langgestrecktes Profilelement 140 ausgekleidet ist. Im montierten Zustand weist auch dieses Profilelement 140 eine etwa U-förmige, nach unten offene Konfiguration auf. Es besteht aus einem flexiblen Material, dessen Seitenwände 142 an ihrem unteren Ende derart ausgebildet sind, dass die Unterkanten der Seitenwände 114 der Tragschienenelemente 111 in entsprechende Ausnehmungen 143 des Profilteils 140 eingreifen. Hierdurch wird das Profilteil 140 klemmend an der Tragschienenanordnung 110 fixiert, wobei gleichzeitig eine weitere Stabilisierung des flexiblen Profilteils 140 in der Tragschienenanordnung 110 dadurch erfolgt, dass einerseits dessen Bodenbereich 141 hinsichtlich seiner Form an den Bodenbereich 112 der Tragschienenelemente 111 angepasst ist und andererseits von den Seitenwänden 114 der Tragschienenelemente 111 entsprechende Vorsprünge 115 nach innen ragen, welche zusätzlich die Seitenwände 142 des Profilelements 140 in etwa auf halber Höhe abstützen.

Dieses Profilelement 140 besteht wie bereits erwähnt aus einem flexiblen Material, was den Vorteil mit sich bringt, dass aufgrund dessen Flexibilität die Möglichkeit besteht, das Profilelement 140 im nicht-montierten Zustand zu einer Rolle aufzuwickeln. Dies bringt beträchtliche Vorteile mit sich, da das vorzugsweise in einem Extrusionsverfahren hergestellte Profilelement 140 "endlos", also in Praxis mit einer sehr großen Länge hergestellt und zu der Rolle aufgewickelt werden kann, so dass dessen Transport zum Einsatzort deutlich vereinfacht wird. Hier kann dann das Profilelement 140 auf eine Länge abgeschnitten werden, die vorzugsweise der gesamten Länge der Tragschienenanordnung 110 bzw. des Lichtbandsystems 100 entspricht, so dass also insbesondere das Profilelement 140 die Stoßstellen zwischen zwei in Längsrichtung hintereinander angeordneten Tragschienenelementen 111 überbrückt. Letztendlich wird mit Hilfe des Profilelements 140 abgesehen von der offenen Unterseite sowie von den beiden Stirnseiten ein vollständig umschlossener Aufnahmeraum 145 geschaffen, so dass insbesondere von Seiten der Tragschienenanordnung 110 her nicht die Gefahr besteht, dass Staub oder Feuchtigkeit in diesen Aufnahmeraum 145 eindringen kann. Hierdurch kann der Schutz vor äußeren Einflüssen deutlich erhöht werden, so dass in einfacher und eleganter Weise die Möglichkeit besteht, ein Lichtband zur realisieren, welches einer sog. höheren Schutzklasse entspricht.

Zum Erzielen dieser Schutzklasse ist selbstverständlich erforderlich, dass der Aufnahmeraum 145 für die elektrischen und elektronischen Komponenten des Lichtbandsystems 100 auch von der Lichtaustrittsseite her verschlossen ist.

Dies wird bei dem Lichtbandsystem 100 gemäß der Figuren 1-3 durch eine Abdeckung 150 erzielt, welche zunächst ein plattenförmiges längliches, aus einem lichtdurchlässigen Material bestehendes Lichtaustrittselement 151 sowie zu beiden Seiten des Lichtaustrittselements 151 verlaufende Befestigungsprofile 152 enthält. Die Form der seitlichen Befestigungsprofile ist hierbei - wie erkennbar ist - an die Form der unteren Endbereiche des Profilelements 140 angepasst, so dass eine klemmende Verbindung zwischen beiden Elementen 140, 150 über die gesamte Länge hinweg erzielt wird.

Eine derartige Abdeckung 150 ist wie bereits oben erwähnt aus einer früheren Anmeldung (WO 2014/174019 A1) der Anmelderin bekannt und weist wiederum den Vorteil auf, dass sie derart flexibel ist, dass sie aus dem länglichen Zustand zu einer Rolle aufgewickelt werden kann. Erreicht wird dies dadurch, dass das Material für das Lichtaustrittselement 151 derart gewählt wird, dass dieses zumindest biegeschlaff ist, und die seitlichen Befestigungsprofile aus einem nochmals flexibleren Material gebildet sind. Wiederum ergeben sich wie auch bei dem Profilelement 140 die gleichen Vorteile, dass nämlich die Abdeckung 150 in dem aufgerollten Zustand wesentlich einfacher an den Einsatzort transportiert werden und dort auf die gewünschte Länge, die vorzugsweise der Gesamtlänge des Lichtbandsystems 100 entspricht, abgeschnitten werden kann.

Die sich hierbei ergebende einstückige Ausführungsform der Abdeckung 150 und damit insbesondere des Lichtaustrittselements 151 hat dabei nicht nur zur Folge, dass wie oben beschrieben der Aufnahmeraum 145 möglichst gut umschlossen ausgeführt werden kann, sondern führt darüber hinaus auch zu optischen Vorteilen hinsichtlich der Lichtabgabe, da keine Stoßstellen, Spalte oder anderen Lücken entstehen, über die Licht ungehindert austreten kann. Mit Hilfe des in den Figuren 1-3 dargestellten Lichtbandsystems 100 kann also eine über eine große Distanz hinweg homogene und gleichmäßige Lichtabgabe erzielt werden.

Auf der anderen Seite führen allerdings die oben beschriebene einstückige Ausgestaltung des Profilelements 140 zum Auskleiden des Aufnahmeraums 120 der Tragschienenanordnung 110 sowie die einstückige Form der Abdeckung 150 auch zu neuartigen Problemen bei der Montage des Lichtbandsystems 100. So ist es nun nicht mehr möglich, zunächst die einzelnen Tragschienenelemente 111 der Tragschienenanordnung 110 mit den entsprechenden Komponenten zu versehen und erst anschließend die Tragschienenelemente 111 aufzuhängen und jeweils stirnseitig aneinanderzufügen. Stattdessen können insbesondere das Profilelement 140 und die Abdeckung 150 nur an die bereits aneinandergefügten Tragschienenelemente 111 angebracht werden.

Da es allerdings nicht praktikabel ist, alle Tragschienenelemente 111 zunächst bspw. am Boden eines zu beleuchtenden Raums zusammenzufügen und dann in einem Schritt gemeinsam aufzuhängen, bedeutet dies, dass bei der Montage des in den Figuren 1-3 dargestellten Lichtbandsystems 100 zunächst die Tragschienenelemente 111 aufgehängt und zu der Tragschienenanordnung 110 zusammengefügt werden müssen. Anschließend wird dann diese aufgehängte Tragschienenanordnung 110 durch das Profilelement 140 ausgekleidet. Danach werden bspw. die kettenartigen Leuchtmittel 130 in dem Aufnahmeraum 145 befestigt und abschließend die gesamte Anordnung durch die Abdeckung 150 verschlossen.

Dies alles muss wie bereits erwähnt im aufgehängten Zustand der Tragschienenanordnung 110 erfolgen, wobei sich hierbei aufgrund der großen Länge des Profilelements 140 und der Abdeckung 150 Schwierigkeiten bei deren Handhabung ergeben. Dies ist insbesondere dann der Fall, wenn sich die Tragschienenanordnung 110 - wie in der Regel üblich - in einer Höhe befindet, derart, dass diese nur unter Nutzung von Hilfsmitteln wie Leitern oder dergleichen erreichbar ist. In diesem Fall ist ein manuelles Befestigen der verschiedenen Baueinheiten dann mit einem hohen Aufwand verbunden. Bei den kettenartigen Leuchtmitteln oder einer Durchgangsverdrahtung mit in regelmäßigen Abständen angeordneten Kontaktierungsmöglichkeiten bestünde zwar die Möglichkeit, kürzere Elemente in einfacher Weise jeweils in einem Tragschienenelement zu montieren und dann jeweils beim Zusammenfügen der Tragschienenelemente auch die elektrischen bzw. elektronischen Komponenten zu koppeln. Auch in diesem Fall wäre es allerdings aus herstellungstechnischen Gründen praktikabler, wenn die Leuchtmittel bzw. die Durchgangsverdrahtung mit den Kontaktierungsmöglichkeiten in einem durchgehenden Stück an der Tragschienenanordnung 110 montiert werden. Es ergeben sich dann allerdings wiederum die oben skizzierten Probleme hinsichtlich der Montage.

Zur Lösung des Problems wird nunmehr eine neuartige Montagevorrichtung vorgeschlagen, welche nachfolgend näher erläutert werden soll.

Dabei wird die Montagevorrichtung zunächst insbesondere im Hinblick auf die Montage des in den Figuren 1-3 dargestellten Profilelements 140 zum Auskleiden des Innenraums 120 der Tragschienenanordnung 110 erläutert. Wie allerdings noch separat erläutert werden wird, kann die gleiche Vorgehensweise auch bei der Montage der Leuchtmittel 130 bzw. einer Durchgangsverdrahtung und/oder der Abdeckung 150 zum Einsatz kommen. Ferner kann die erfindungsgemäße Lösung nicht nur bei dem speziellen, in den Figuren 1-3 dargestellten Lichtbandsystem 100 eingesetzt werden, sondern ist auch dann z.B. nutzbar, wenn ein Auskleiden des Innenraums einer Tragschienenanordnung gar nicht vorgesehen ist sondern lediglich eine längliche Abdeckung zur Lichtabgabe montiert werden soll. Auch könnte die Erfindung für den Fall genutzt werden, dass die Abdeckung 150 nicht wie in den Figuren 1-3 gezeigt mit dem flexiblen Profilelement 140 sondern unmittelbar mit der Tragschienenanordnung 110 verklemmt bzw. an dieser befestigt werden soll.

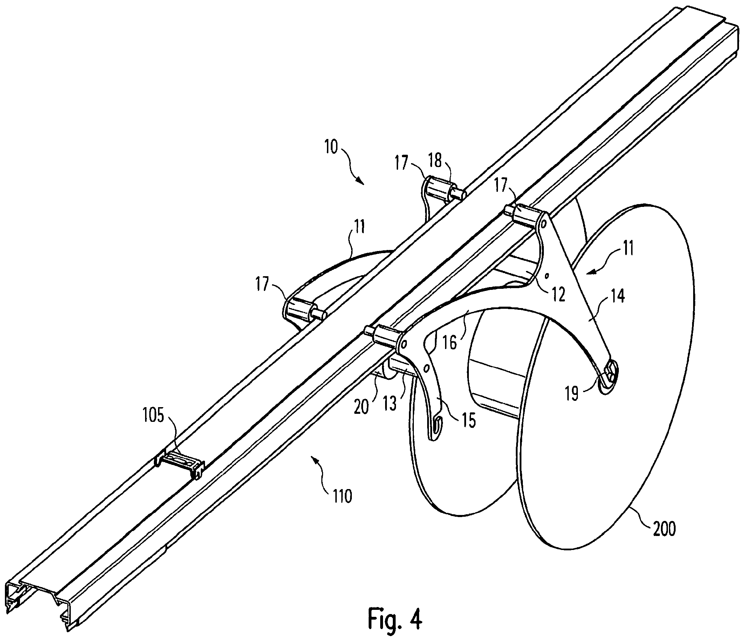

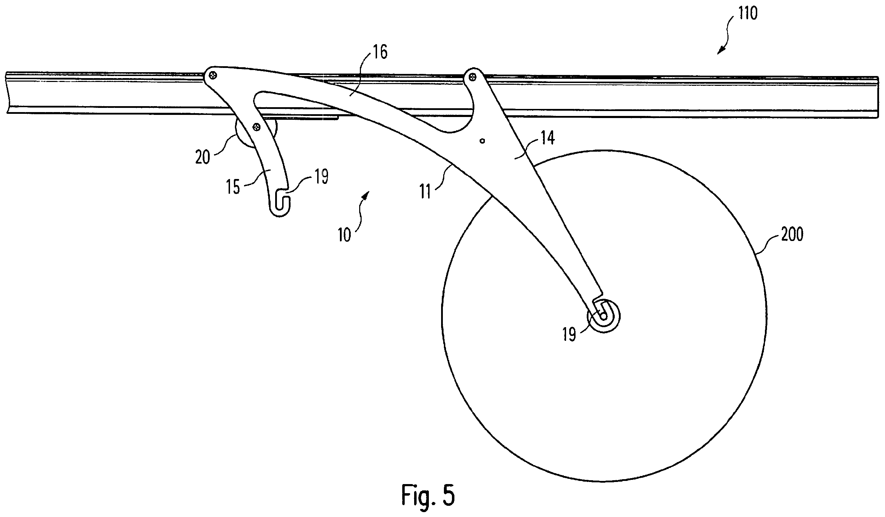

Die Figuren 4-6 zeigen also zunächst ein erstes Ausführungsbeispiel einer erfindungsgemäßen, allgemein mit dem Bezugszeichen 10 versehenen Montagevorrichtung. Diese besteht zunächst aus zwei Seitenteilen 11, welche im vorliegenden Fall über zwei Querachsen 12 und 13 miteinander verbunden sind. Die Seitenteile 11 sind identisch ausgebildet und weisen jeweils einen - bezogen auf die später noch beschriebene Bewegungsrichtung - vorderen Arm 14 und einen hinteren Arm 15 auf, wobei beide Arme 14, 15 über einen bogenförmig verlaufenden Verbindungsbereich 16 miteinander verbunden sind.

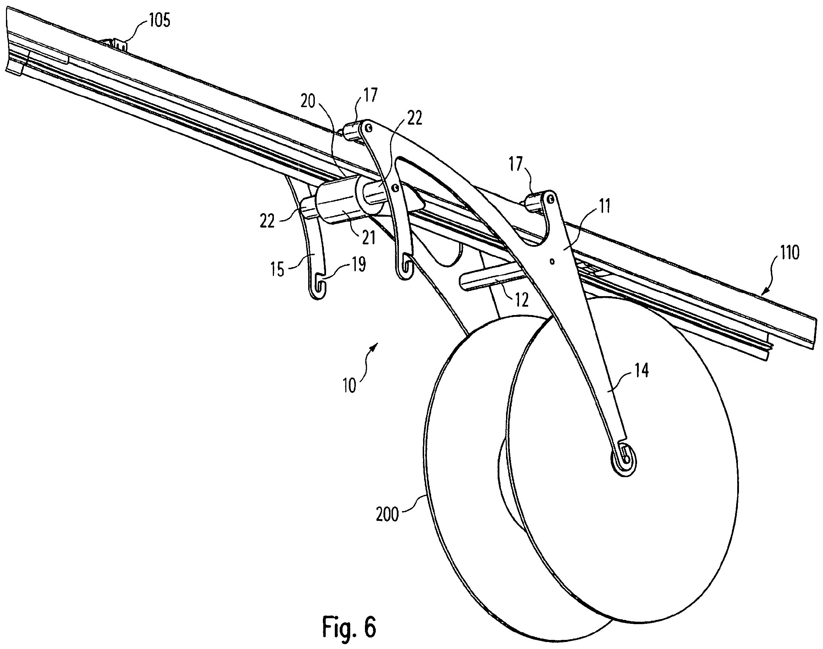

An den oberen Enden beider Arme 14, 15 sind jeweils leicht nach innen ragende Vorsprünge bzw. Achsen vorgesehen, die der drehbaren Lagerung von Auflageelementen 17 dienen. Diese Auflageelemente 17 sind dabei zylinderartig mit einem hinsichtlich seines Durchmessers reduzierten Endbereich 18 ausgebildet, so dass die gesamte Montagevorrichtung 10 wie in den Figuren 4 und 6 erkennbar an der Oberseite der Tragschienenanordnung 110 aufgelegt und entlang dieser verfahren werden kann. Diese Auflageelemente 17 führen hierbei zu einer definierten Anordnung der Montagevorrichtung 10 bzgl. der Tragschienenanordnung 110 und ermöglichen insbesondere auch das Verfahren der Montagevorrichtung 10 über die einzelnen Klammern 105 hinaus, so dass die Montagevorrichtung 10 ungehindert über die gesamte Länge der Tragschienenanordnung 110 hinweg verfahren werden kann.

An ihren unteren Enden weisen die Arme 14, 15 der Seitenteile 11 der Montagevorrichtung 10 abgewinkelte Ausnehmungen 19 auf, die der Aufhängung von aufgerollten, zu montierenden Komponenten dienen. Im dargestellten Ausführungsbeispiel der Figuren 4-6 wird lediglich die Aufhängungsmöglichkeit der Arme 14 genutzt, in die nunmehr eine Rolle 200 drehbar eingehängt ist. Auf dieser Rolle 200 befindet sich dann die aufgewickelte, an der Tragschienenanordnung 110 zu montierende Baueinheit.

Im vorliegenden Fall wird wie bereits erwähnt davon ausgegangen, dass mit Hilfe der Montagevorrichtung 10 das Profilelement 140 zum Auskleiden der Tragschienenanordnung 110 an dieser montiert werden soll. Hierfür ist erforderlich, dass das Profilelement 140 in geeigneter Weise gegenüber der Tragschienenanordnung 110 positioniert und an diese angedrückt bzw. angepresst wird. Die Montagevorrichtung 10 weist hierfür Anpressmittel auf, die im dargestellten Fall durch eine Anpressrolle 20 realisiert sind, welche drehbar auf einer der beiden die Seitenteile 11 miteinander verbindenden Achsen 12, 13, im vorliegenden Fall auf der Achse 13 angeordnet ist. Diese Anpressrolle 20 ist derart gestaltet, dass sie das zu montierende Führungselement 140 in eine für die Montage geeignete Form bringt und darüber hinaus auch an die Tragschienenanordnung 110 andrückt. Hierzu ist ein etwas verdickter Zentralbereich 21 mit im Durchschnitt verjüngten Seitenbereichen 22 vorgesehen (siehe Figur 6). Das über diese Anpressrolle 20 laufende Profilelement 140 wird dann automatisch von der aufgewickelten, eher flachen Form in die im Montagezustand erreichte U-Form überführt, was u.a. dadurch erreicht wird, dass der verdickte Zentralbereich 21 der Anpressrolle 20 in den Innenraum 120 der Tragschienenanordnung 110 hineinragt. Ferner verlaufen die beiden Seitenbereiche 22 knapp unterhalb der Unterkanten der Seitenwände 114 der Tragschienenelemente 111, so dass die unteren Endbereiche 143 der Seitenwände 142 des Profilelements 140 derart an das Tragschienenelement 110 gedrückt werden, dass der in Figur 3 in Schnittdarstellung erkennbare klemmende Eingriff erzielt wird.

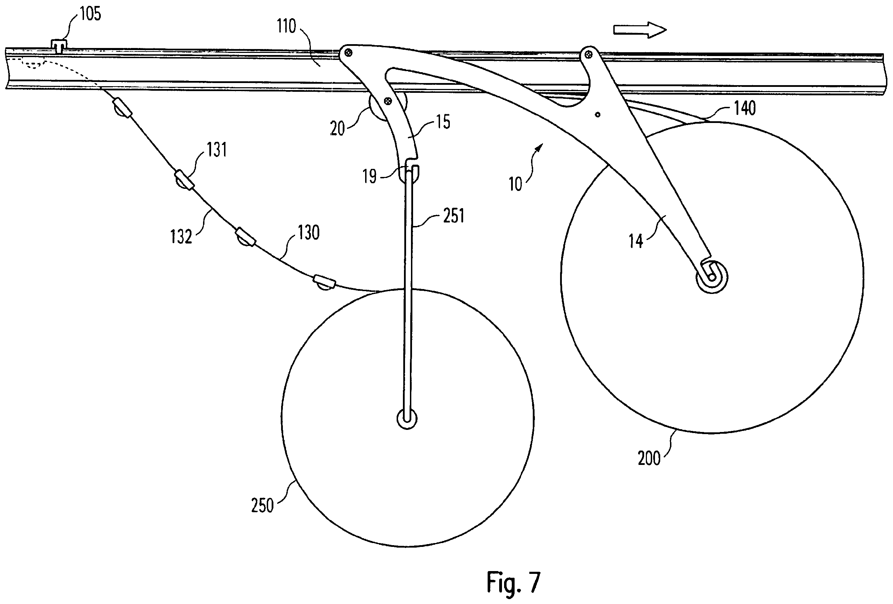

Während der Nutzung der erfindungsgemäßen Montagevorrichtung 10, die in Figur 7 dargestellt ist, wird also die Montagevorrichtung 10 in der in Figur 7 gezeigten Pfeilrichtung gegenüber der Tragschienenanordnung 110 verfahren. Hierbei wird - da bereits ein Teil des Profilelements 140 klemmend an der Tragschienenanordnung 110 befestigt ist und ferner auch das Profilelement 140 zwischen Tragschienenanordnung 110 und Anpressrolle 20 eingeklemmt ist - automatisch das Profilelement 140 von der Rolle 200 abgewickelt und mit Hilfe der Anpressrolle 20 an das Tragschienenanordnung 110 angedrückt, so dass das Profilelement 140 letztendlich in der in den Figuren 1-3 dargestellten Konfiguration an der Tragschienenanordnung 110 befestigt wird. Dies kann in einem kontinuierlichen Arbeitsgang erfolgen, so dass letztendlich durch ein einmaliges Abfahren der gesamten Tragschienenanordnung 110 mit Hilfe der Montagevorrichtung 10 das Profilelement 140 an der Tragschienenanordnung 110 befestigt werden kann. In der Regel wird auch hier ein mehrmaliges Besteigen einer zu versetzenden Leiter oder eines vergleichbaren Hilfsmittels erforderlich sein, da allerdings während des Besteigens der Leiter bzw. des Herabsteigens nun nicht mehr das noch nicht an der Tragschiene befestigte Profilelement gehalten bzw. getragen werden muss, ist die Montage deutlich einfacher und komfortabler durchzuführen und die Gefahr eines Sturzes wird ebenfalls deutlich reduziert.

Figur 7 zeigt bereits eine Weiterbildung des bislang beschriebenen Konzepts, bei der nämlich die Aufhängungsmöglichkeit der hinteren Arme 15 zusätzlich zur Halterung einer zweiten Rolle 250 genutzt wird, die z.B. mittels zusätzlicher Bügel 251 in die Ausnehmungen 19 eingehängt ist und auf der nunmehr die zu montierenden kettenartigen Leuchtmittel 130 mit der Durchgangsverdrahtung 132 sowie den daran angeordneten LED-Leuchtmodulen 131 aufgewickelt sind. Dabei Verfahren der Montagevorrichtung 10 in Pfeilrichtung zunächst die Tragschienenanordnung 110 durch das Profilelement 140 ausgekleidet wird, kann unmittelbar daran anschließend die Montage der Leuchtmittel 130 erfolgen. Diese werden nunmehr nicht automatisch von der Rolle 250 abgewickelt und in dem Tragschienenanordnung 110 befestigt, sondern es muss ein Abwickeln und insbesondere Befestigen von Hand erfolgen. Trotz allem ergibt sich der Vorteil, dass wiederum die Halterung der aufgewickelten Leuchtmittel 130 durch die Montagevorrichtung 10 erfolgt und eine separate, an die Befestigung des Profilelements 140 sich anschließende Montage der Leuchtmittel 130 entfallen kann. Stattdessen kann die Montage beider Komponenten, also Profilelement 140 und Leuchtmittel 130 in einem Arbeitsgang erfolgen, wodurch der Montageaufwand weiter reduziert werden kann.

In vergleichbarer Weise kann dann in einem abschließenden Arbeitsschritt auch die Befestigung der Abdeckung 150 erfolgen, wobei auch diese ebenso wie das Profilelement 140 mit Hilfe der Montagevorrichtung 10 während des Entlangfahrens automatisch abgewickelt und mittels geeigneter Anpressmittel an der Unterseite der Tragschienenanordnung 110 befestigt werden kann. Es ist hierfür lediglich eine entsprechende Anpassung des Querschnitts der Anpressmittel, also der Rolle 20 erforderlich, um das automatische, zuverlässige Befestigen zu ermöglichen, wobei diese selbstverständlich auch dann möglich wäre, wenn die Abdeckung 150 unmittelbar mit der Tragschienenanordnung 110 verbunden werden soll.

Für den Fall also, dass alle drei Baueinheiten mit Hilfe der erfindungsgemäßen Vorgehensweise befestigt werden sollen, würde es sich anbieten, in einem ersten Schritt - wie in Figur 7 dargestellt - zunächst Profilelement 140 und Leuchtmittel 130 zu montieren und in einem zweiten Arbeitsschritt, wiederum unter Verwendung der erfindungsgemäßen Montagevorrichtung 110 abschließend die Abdeckung 150 zu befestigen. Offensichtlich stellt diese eine sehr komfortable und einfach durchzuführende Vorgehensweise hinsichtlich der Befestigung der verschiedenen Komponenten dar, durch welche der Aufwand im Vergleich zu bislang durchzuführenden Arbeiten deutlich reduziert werden kann.

Anzumerken ist, dass ergänzend zu der dargestellten Anpressrolle 20 durchaus weitere Führungs- bzw. Anpressmittel an der Montagevorrichtung 10 vorgesehen sein könnten, durch welche das optimale Positionieren und anschließende Befestigen bspw. des Profilelements 140 oder aber auch der Abdeckung 150 verbessert wird. Insbesondere das Profilelement 140 muss vom aufgewickelten zum montierten Zustand eine starke Formänderung von einer flachen Form zu der dargestellten U-förmigen Form durchführen. Es hat sich hierbei als vorteilhaft herausgestellt, wenn der Anpressrolle 20 vorgeordnet noch weitere Hilfsmittel zum Einsatz kommen, welche diese Formveränderung unterstützen. Dies können weitere, an den Seitenteilen 11 der Montagevorrichtung 10 befestigte Rollen sein, über welche das Profilelement 140 läuft und in die gewünschte Form gebracht wird. Auch anderweitige Führungsschienen oder -flächen, mit deren Hilfe das Profilelement 140 oder aber auch die Abdeckung 150 in eine definierte Position bzgl. der Tragschienenanordnung 110 gebracht werden kann, wären sinnvoll.

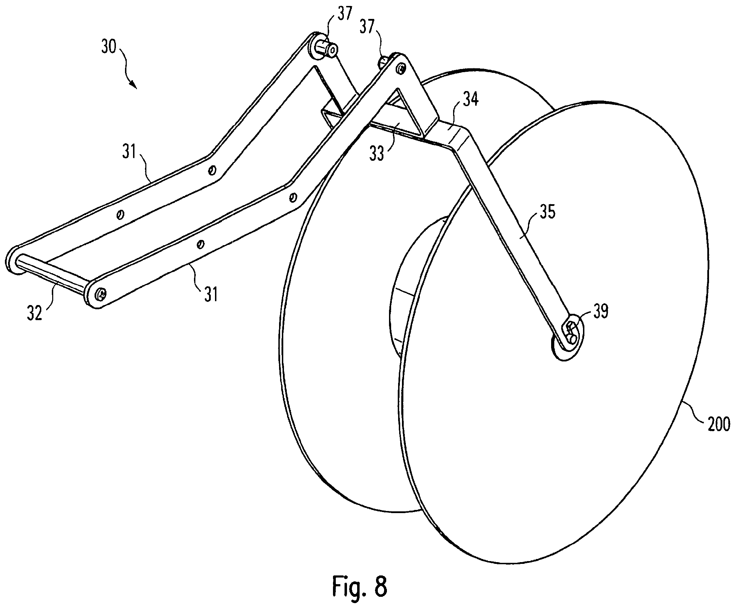

Eine zweite Variante einer erfindungsgemäßen Montagevorrichtung, die mit dem Bezugszeichen 30 versehen ist, ist in den Figuren 8-11 gezeigt. Auch diese Vorrichtung 30 besteht aus zwei Seitenteilen 31, die einerseits über eine Achse 32 und andererseits einen Quersteg 33 miteinander verbunden sind. Am Quersteg 33 ist ein U-förmiger Bügel 34 mit zwei hierdurch gebildeten Seitenarmen 35 befestigt, wobei am unteren Ende der Arme 35 wiederum die abgewinkelten Ausnehmungen 39 vorgesehen, die der Aufhängung einer Rolle 200 mit der darauf aufgewickelten, zu montierenden länglichen Baueinheit dienen. Weiterhin sind auch in diesem Fall nach innen ragende, drehbare Vorsprünge 37 vorgesehen, welche ein definiertes Entlangführen bzw. -fahren der Vorrichtung 30 gegenüber der Tragschienenanordnung 110 ermöglichen, wobei die Vorsprünge 37 wiederum derart gestaltet sind, dass sie nicht mit den Aufhängungsklammern 105 kollidieren und dementsprechend tatsächlich ein Verschieben der Montagevorrichtung 10 über die gesamte Länge der Tragschienenanordnung hinweg erlauben.

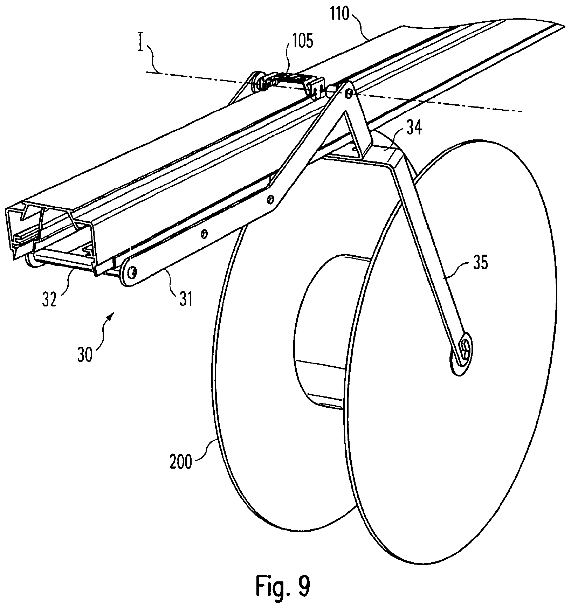

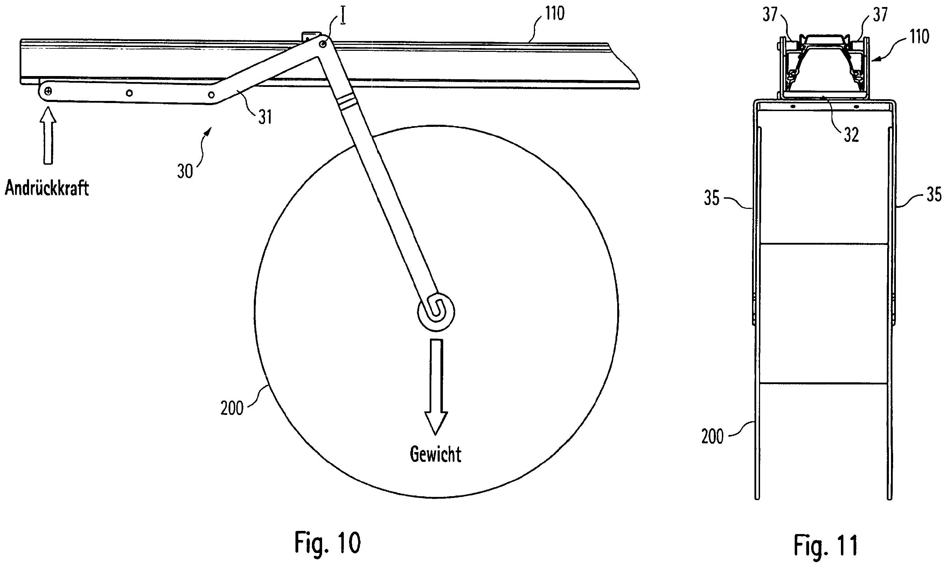

Der wesentliche Unterschied zu der in den Figuren 4-7 dargestellten ersten Ausführungsform besteht darin, dass nunmehr lediglich ein einziges Paar Führungsvorsprünge 37 vorgesehen ist, die an der Oberseite der Tragschienenanordnung 110 aufliegen, so dass sich eine in Figur 10 angedeutete wippenartige Aufhängung mit einer durch die Führungsvorsprünge 37 festgelegten Schwenkachse I (siehe Figuren 9 und 10) ergibt. Das Gewicht der Rolle 200 mit der darauf aufgewickelten und zu montierenden Baueinheit führt hierbei dazu, dass das leichter hintere Ende der Arme 31 mit der daran befindlichen Achse 32 nach oben gedrückt wird. Diese Achse 32 dient wiederum der Halterung eines - nicht näher dargestellten - Andrück- bzw. Anpresselements, wobei aufgrund der speziellen Art und Weise der Aufhängung das Andrückelement gleichzeitig für eine geeignete Andrückkraft zur Befestigung der Baueinheit sorgt.

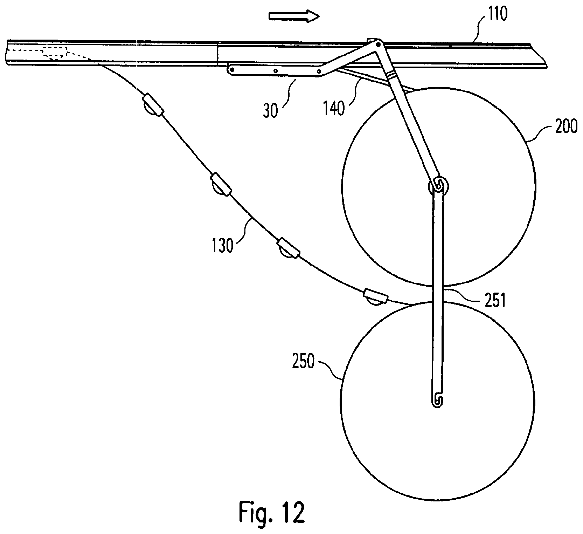

Hinsichtlich ihrer weiteren Funktionsweise gleicht auch die zweite Variante der erfindungsgemäßen Montagevorrichtung 30 der ersten Variante gemäß der Figuren 4-7. D.h., wiederum wird - wie in Figur 12 schematisch dargestellt - die Montagevorrichtung 30 in Pfeilrichtung gegenüber der Tragschienenanordnung 110 bewegt, wobei hierbei automatisch die zu montierende Baueinheit 140 von der Rolle 200 abgewickelt und an der Tragschienenanordnung 110 befestigt wird. Zusätzlich kann mit Hilfe weiterer Bügel 251 an der Unterseite der ersten Rolle 200 eine zweite Rolle 250 befestigt werden, die bspw. wiederum der Halterung der zu montierenden Leuchtmittel 130 oder einer Durchgangsverdrahtung mit geeigneten Kontaktierungsmöglichkeiten dient.

Auch in diesem Fall kann die eine Anpressrolle durch weitere Führungsmittel, durch welche das Positionieren und Befestigen der zu montierenden Baueinheit optimiert wird, ergänzt werden.

Letztendlich wird also mit Hilfe der erfindungsgemäßen Montagevorrichtung das Montieren von Lichtbandsystemen deutlich optimiert und vereinfacht. Selbstverständlich stellt das automatische Abwickeln und Andrücken zu montierender Baueinheiten an die Tragschienenanordnung einen besonderen Vorteil der erfindungsgemäßen Lösung dar. Allein jedoch bereits die Möglichkeit, eine Halterung für eine aufgewickelte, zu montierende Baueinheit entlang der Tragschienenanordnung verfahren zu können, bringt bereits Vorteile mit sich. D.h., selbst für den Fall, dass lediglich eine Durchgangsverdrahtung oder ein kettenartiges Leuchtmittel montiert werden soll, welches von Hand abgewickelt und manuell an der Tragschienenanordnung zu befestigen ist, ergeben sich bei Verwendung der erfindungsgemäßen Vorrichtung bereits deutliche Vorteile.

## Patentansprüche

1. Verfahren zum Befestigen einer zumindest teilweise flexibel ausgebildeten länglichen Baueinheit (130, 140, 150) an einer sich entlang einer Längsrichtung ersteckenden Tragschienenanordnung (110),
wobei die zu befestigende Baueinheit (130, 140, 150) zu einer Rolle (200, 250) aufgewickelt zur Verfügung gestellt wird,
wobei die Baueinheit (130, 140, 150) mittels einer Montagevorrichtung (10, 30) befestigt wird, welche dazu ausgebildet ist, an der Tragschienenanordnung (110) angeordnet und entlang dieser bewegt zu werden,
wobei die Montagevorrichtung (10, 30) die zu der Rolle aufgewickelte Baueinheit (130, 140, 150) drehbar trägt und diese während der Fortbewegung entlang der Tragschienenanordnung (110) abgewickelt wird,
**dadurch gekennzeichnet,**
**dass** es sich bei der zu befestigenden Baueinheit (130, 140, 150) um ein aus einem flexiblen Material bestehendes Profilelement handelt und
wobei die Montagevorrichtung (10, 30) Anpressmittel (20) zum Andrücken des Profilelements an die Tragschienenanordnung (110) aufweist, derart, dass das Profilelement klemmend an der Tragschienenanordnung (110) befestigt wird.

2. Verfahren nach Anspruch 1,
**dadurch gekennzeichnet,**
**dass** die Montagevorrichtung (10, 30) in die Tragschienenanordnung (110) eingehängt wird.

3. Verfahren nach Anspruch 1 oder 2,
**dadurch gekennzeichnet,**
**dass** die Anpressmittel (20) mindestens eine Rolle umfassen, über welche das abgewickelte Profilelement geführt wird.

4. Verfahren nach Anspruch einem der vorherigen Ansprüche,
**dadurch gekennzeichnet,**
**dass** die Montagevorrichtung (10, 30) zusätzliche Führungsmittel aufweist, mit deren Hilfe das Profilelement vor dem Andrücken an die Tragschienenanordnung (110) in eine zur Befestigung geeignete Lage und/oder Form gebracht wird,
wobei die zusätzlichen Führungsmittel vorzugsweise durch Rollen und Führungsflächen gebildet sind.

5. Verfahren nach einem der vorherigen Ansprüche,
**dadurch gekennzeichnet,**
**dass** es sich bei dem zu befestigenden Profielementelement um ein Element zum Auskleiden der Tragschienenanordnung (110) handelt,
und/oder
**dass** es sich bei dem zu befestigenden Profielementelement um eine lichtdurchlässige Abdeckung eines Lichtbandsystems (100) handelt.

6. Verfahren nach einem der vorherigen Ansprüche,
**dadurch gekennzeichnet,**
**dass** es sich bei der zu befestigenden Anordnung um eine Verkabelung (132) handelt, welche vorzugsweise in regelmäßigen Abständen angeordnete Bauelemente wie z.B. Kontaktierungselemente oder Leuchtmodule (131) aufweist.

7. Verfahren nach einem der vorherigen Ansprüche,
**dadurch gekennzeichnet,**
**dass** unter Verwendung der Montagevorrichtung in einem Arbeitsgang zwei längliche Baueinheiten (130, 140, 150) an der Tragschienenanordnung befestigt werden.

8. Kombination einer Montagevorrichtung (10, 30) und einer Baueinheit (130, 140, 150), wobei die Montagevorrichtung zur Unterstützung der Befestigung der zumindest teilweise flexibel ausgebildeten länglichen Baueinheit (130, 140, 150) an einer sich entlang einer Längsrichtung ersteckenden Tragschienenanordnung (110) ausgestattet ist, wobei die zu befestigende Baueinheit (130, 140, 150) zu einer Rolle (200, 250) aufgewickelt zur Verfügung gestellt wird,
wobei die Montagevorrichtung (10, 30) dazu ausgebildet ist, an der Tragschienenanordnung (110) angeordnet und entlang dieser bewegt zu werden, wobei die Montagevorrichtung (10, 30) Mittel zur drehbaren Halterung der zu der Rolle aufgewickelte Baueinheit (130, 140, 150) aufweist
**dadurch gekennzeichnet,**
**dass** es sich bei der zu befestigenden Baueinheit (130, 140, 150) um ein aus einem flexiblen Material bestehendes Profilelement handelt,
wobei die Montagevorrichtung (10, 30) Anpressmittel (20) zum Andrücken des Profilelements an die Tragschienenanordnung (110) aufweist, derart, dass das Profilelement klemmend an der Tragschienenanordnung (110) befestigt wird.

9. Kombination nach Anspruch 8,
**dadurch gekennzeichnet,**
**dass** die Montagevorrichtung (10, 30) dazu ausgebildet ist, in die Tragschienenanordnung (110) eingehängt zu werden.

10. Kombination nach Anspruch 9,
**dadurch gekennzeichnet,**
**dass** diese drehbar gelagerte Auflageelemente (17) zum Einhängen der Montagevorrichtung (10, 30) in die Tragschienenanordnung (110) aufweist,
wobei vorzugsweise ein Paar von Auflageelementen (17) vorgesehen ist, durch die eine Schwenkachse (I) definiert ist, um welche die Montagevorrichtung (10, 30) schwenkbar in die Tragschienenanordnung (110) einhängbar ist.

11. Kombination nach einem der Ansprüche 8 bis 10,
**dadurch gekennzeichnet,**
**dass** die Anpressmittel (20) mindestens eine Rolle umfassen, über welche das Profilelement geführt wird.

12. Kombination nach einem der Ansprüche 8 bis 11,
**dadurch gekennzeichnet,**
**dass** die Montagevorrichtung (10, 30) zusätzliche Führungsmittel aufweist, mit deren Hilfe das Profilelement vor dem Andrücken an die Tragschienenanordnung (110) in eine zur Befestigung geeignete Lage und/oder Form gebracht wird.

13. Kombination nach Anspruch 12,
**dadurch gekennzeichnet,**
**dass** die zusätzlichen Führungsmittel durch Rollen und Führungsflächen gebildet sind.

14. Kombination nach einem der Ansprüche 8 bis 13,
**dadurch gekennzeichnet,**
**dass** - bezüglich der Schwenkachse (I) - die Mittel zur drehbaren Halterung der zu der Rolle aufgewickelte Baueinheit (130, 140, 150) den Anpressmitteln (20) gegenüberliegend angeordnet sind.

15. Kombination nach einem der Ansprüche 8 bis 14,
**dadurch gekennzeichnet,**
**dass** diese Mittel zur drehbaren Halterung von zwei jeweils zu einer Rolle aufgewickelten Baueinheiten (130, 140, 150) aufweist.

## Claims

1. Method for fastening an at least partially flexibly designed, oblong structural unit (130, 140, 150) to a support rail arrangement (110) extending along a longitudinal direction,
wherein the structural unit (130, 140, 150) to be fastened is provided wound up to a roll (200, 250),
wherein the structural unit (130, 140, 150) is fastened by means of a mounting device (10, 30), which is designed to be arranged on and moved along the support rail arrangement (110),
wherein the mounting device (10, 30) rotatably supports the structural unit (130, 140, 150) wound up to the roll and that said structural unit is unwound during the movement along the support rail arrangement (110),
**characterized in that**
the structural unit (130, 140, 150) to be fastened is a profile element consisting of a flexible material and
wherein the mounting device (10, 30) comprises pressing means (20) for pressing the profile element against the support rail arrangement (110) such that the profile element is fastened to the support rail arrangement (110) in a clamping manner.

2. Method according to claim 1,
**characterized in that**
the mounting device (10, 30) is hooked into the support rail arrangement (110).

3. Method according to claim 1 or 2,
**characterized in that**
the pressing means (20) comprise at least one roller over which the unwound profile element is guided.

4. Method according to one of the preceding claims,
**characterized in that**
the mounting device (10, 30) comprises additional guiding means,
with the help of which the profile element is brought into a position and/or shape suitable for fastening prior to being pressed against the support rail arrangement (110),
wherein the additional guiding means are preferably formed by rollers and guide surfaces.

5. Method according to one of the preceding claims,
**characterized in that**
the profile element to be fastened is an element for lining the support rail arrangement (110),
and/or
the profile element to be fastened is a light-permeable cover of a light band system (100).

6. Method according to one of the preceding claims,
**characterized in that**
the arrangement to be fastened is a cabling (132) which comprises components preferably arranged at regular intervals, such as contact elements or lighting modules (131).

7. Method according to one of the preceding claims,
**characterized in that**
two oblong structural units (130, 140, 150) are fastened in one work step to the support rail arrangement using the mounting device.

8. Combination of a mounting device (10, 30) and a structural unit (130, 140, 150), wherein the mounting device is equipped to support the fastening of the at least partially flexibly designed, oblong structural unit (130, 140, 150) to a support rail arrangement (110) extending along a longitudinal direction, wherein the structural unit (130, 140, 150) to be fastened is provided wound up to a roll (200, 250),
wherein the mounting device (10, 30) is designed to be arranged on and moved along the support rail arrangement (110), wherein the mounting device (10, 30) comprises means for rotatably holding the structural unit (130, 140, 150) wound up to the roll,
**characterized in that**
the structural unit (130, 140, 150) to be fastened is a profile element consisting of a flexible material,
wherein the mounting device (10, 30) comprises pressing means (20) for pressing the profile element against the support rail arrangement (110) such that the profile element is fastened to the support rail arrangement (110) in a clamping manner.

9. Combination according to claim 8,
**characterized in that**
the mounting device (10, 30) is designed to be hooked into the support rail arrangement (110).

10. Combination according to claim 9,
**characterized in that**
it comprises pivoted bearing elements (17) for hooking the mounting device (10, 30) into the support rail arrangement (110), wherein preferably one pair of bearing elements (17) is provided by which a pivot axis (I) is defined, about which the mounting device (10, 30) can be pivotably hooked into the support rail arrangement (110) .

11. Combination according to one of claims 8 to 10,
**characterized in that**
the pressing means (20) comprise at least one roller over which the profile element is guided.

12. Combination according to one of claims 8 to 11,
**characterized in that**
the mounting device (10, 30) comprises additional guiding means, with the help of which the profile element is brought into a position and/or shape suitable for fastening prior to being pressed against the support rail arrangement (110).

13. Combination according to claim 12,
**characterized in that**
the additional guiding means are formed by rollers and guide surfaces.

14. Combination according to one of claims 8 to 13,
**characterized in that**
with regard to the pivot axis (I), the means for rotatably holding the structural unit (130, 140, 150) wound up to the roll are arranged opposite the pressing means (20).

15. Combination according to one of claims 8 to 14,
**characterized in that**
it comprises means for rotatably holding two structural units (130, 140, 150) respectively wound up to a roll.

## Revendications

1. Procédé de fixation d'une unité structurelle (130, 140, 150) oblongue formée au moins partiellement de manière souple sur un agencement de rails porteurs (110) s'étendant le long d'une direction longitudinale,
l'unité structurelle (130, 140, 150) à fixer étant mise à disposition de manière enroulée sur un rouleau (200, 250), l'unité structurelle (130, 140, 150) étant fixée au moyen d'un dispositif de montage (10, 30) lequel est formé pour être disposé sur l'agencement de rails porteurs (110) et déplacé le long de celui-ci,
le dispositif de montage (10, 30) supportant en rotation l'unité structurelle (130, 140, 150) enroulée sur le rouleau et qui est déroulée lors du déplacement le long de l'ensemble profilé porteur (110),
**caractérisé en ce**
**que** l'unité structurelle (130, 140, 150) à fixer concerne un élément profilé composé d'un matériau souple et
le dispositif de montage (10, 30) présentant un moyen de pression (20) destiné à presser l'élément profilé sur l'agencement de rails porteurs (110), de sorte que l'élément profilé est fixé par serrage sur l'agencement de rails porteurs (110).

2. Procédé selon la revendication 1,
**caractérisé en ce**
**que** le dispositif de montage (10, 30) est suspendu dans l'agencement de rails porteurs (110).

3. Procédé selon la revendication 1 ou 2,
**caractérisé en ce**
**que** les moyens de pression (20) comprennent au moins un rouleau sur lequel est guidé l'élément profilé déroulé.

4. Procédé selon l'une quelconque des revendications précédentes,
**caractérisé en ce**
**que** le dispositif de montage (10, 30) présente des moyens de guidage supplémentaires permettant de placer l'élément profilé avant la pression sur l'agencement de rails porteurs (110) dans une position et/ou une forme adaptée(s) à la fixation,
les moyens de guidage supplémentaires étant de préférence formés par des rouleaux et des surfaces de guidage.

5. Procédé selon l'une quelconque des revendications précédentes,
**caractérisé en ce**
**que** l'élément profilé à fixer concerne un élément destiné au revêtement de l'agencement de rails porteurs (110),
et/ou
en ce que l'élément profilé à fixer concerne un recouvrement transparent d'un système de bande lumineuse (100).

6. Procédé selon l'une quelconque des revendications précédentes,
**caractérisé en ce**
**que** l'agencement à fixer concerne un câblage (132), lequel présente de préférence des composants structurels disposés à des distances régulières, tels que des éléments de mise en contact ou des modules lumineux (131).

7. Procédé selon l'une quelconque des revendications précédentes,
**caractérisé en ce**
**qu'**en utilisant le dispositif de montage en une seule opération, deux unités structurelles (130, 140, 150) sont fixées sur l'agencement de rails porteurs.

8. Combinaison d'un dispositif de montage (10, 30) et d'une unité structurelle (130, 140, 150), le dispositif de montage étant fourni pour aider à la fixation de l'unité structurelle (130, 140, 150) oblongue formée au moins partiellement de manière souple sur un agencement de rails porteurs (110) s'étendant le long d'une direction longitudinale, l'unité structurelle (130, 140, 150) à fixer étant mise à disposition de manière enroulée sur un rouleau (200, 250),
le dispositif de montage (10, 30) étant formé
pour être disposé sur l'agencement de rails porteurs (110) et déplacé le long de celui-ci, le dispositif de montage (10, 30) présentant un moyen pour le support rotatif de l'unité structurelle (130, 140, 150) enroulée sur un rouleau
**caractérisée en ce**
**que** l'unité structurelle (130, 140, 150) à fixer concerne un élément profilé composé d'un matériau souple,
le dispositif de montage (10, 30) présentant un moyen de pression (20) destiné à presser l'élément profilé sur l'agencement de rails porteurs (110), de sorte que l'élément profilé est fixé par serrage sur l'agencement de rails porteurs (110).

9. Combinaison selon la revendication 8,
**caractérisée en ce**
**que** le dispositif de montage (10, 30) est formé pour être suspendu dans l'agencement de rails porteurs (110).

10. Combinaison selon la revendication 9,
**caractérisée en ce**
**qu'**elle présente des éléments de support montés de manière rotative (17) pour suspendre le dispositif de montage (10, 30) dans l'agencement de rails porteurs (110), de préférence une paire d'éléments de support (17) étant prévue, définie par un axe pivotant (I), autour duquel le dispositif de montage (10, 30) peut être suspendu de manière pivotante dans l'agencement de rails porteurs (110).

11. Combinaison selon l'une quelconque des revendications 8 à 10,
**caractérisée en ce**
**que** les moyens de pression (20) comprennent au moins un rouleau sur lequel est guidé l'élément profilé.

12. Combinaison selon l'une quelconque des revendications 8 à 11,
**caractérisée en ce**
**que** le dispositif de montage (10, 30) présente des moyens de guidage supplémentaires permettant de placer l'élément profilé avant la pression sur l'agencement de rails porteurs (110) dans une position et/ou une forme adaptée(s) à la fixation.

13. Combinaison selon la revendication 12,
**caractérisée en ce**
**que** les moyens de guidage supplémentaires sont formés par des rouleaux et des surfaces de guidage.

14. Combinaison selon l'une quelconque des revendications 8 à 13,
**caractérisée en ce**
**que**, par rapport à l'axe pivotant (I), les moyens de support rotatif de l'unité structurelle (130, 140, 150) enroulée sur le rouleau sont disposés en regard des moyens de pression (20).

15. Combinaison selon l'une quelconque des revendications 8 à 14,
**caractérisée en ce**
**qu'**elle présente un moyen de support rotatif muni de deux unités structurelles (130, 140, 150) enroulées respectivement sur un rouleau.
